# EUROPEAN PATENT APPLICATION

(11) **EP 2 148 163 A2**
(43) Date of publication of application: **27.01.2010**
(21) Application number: 09251865.3
(22) Date of filing: 23.07.2009
(51) Int. Cl.: F28D 21/00, F28F 13/06, F28F 19/00, F24F 3/14

(54) **Single flow circuit heat exchange device for periodic positive and reverse directional pumping**

(30) Priority: 23.07.2008 US 219473; 17.11.2008 US 292307
(71) Applicant: Yang, Tai-Her, Si-Hu Town, Dzan-Hwa (TW)
(72) Inventor: Yang, Tai-Her, Si-Hu Town, Dzan-Hwa (TW)
(74) Representative: Pratt, David Martin

(57) **Abstract**

The present invention discloses that the temperature distribution status between the fluid and the heat exchanger (100) or the full heat exchanger (200) is improved by periodically changing the flow directions of the positive or reverse directional pumping fluid, wherein the positive or reverse directional pumping fluid is passed through the heat exchanger (100) inside fluid pump (123), or through the heat exchanger (200) being interposed or coated with desiccant material, or the heat exchanger itself additionally having moisture absorbing function thereby constituting the full heat exchange functions of thermal energy recovery and dehumidification effect as well as reducing the disadvantages of impurity accumulations at fixed flow direction.

## Description

### BACKGROUND OF THE INVENTION

### (a) Field of the invention

The present invention further improves the conventional applications for various heat exchange device or full heat exchange device to have the single flow circuit heat exchange operating functional structure for controllable periodic positive and reverse directional pumping, wherein the periodic positive and reverse directional pumping fluid is passed through the heat exchanger inside the fluid pump to constitute heat exchange function of the heat exchange device thereby timely improving the temperature distribution status between the fluid and the heat exchanger and promoting the heat exchange efficiency of the heat exchange device; further, by periodic positive and reverse directional pumping fluid in the single flow circuit to pass through the full heat exchanger constituted by heat exchangers being interposed or coated with permeating type or absorption type desiccant material, or passed through the full heat exchanger itself being made of material or structure having both heat absorbing and moisture absorbing function thereby constituting the full heat exchange function of the full heat exchanger for thermal energy recovery and dehumidification functional operations of heat exchange and for reducing the defects of impurity accumulation due to fixed directional flow.

### (b) Description of the Prior Art

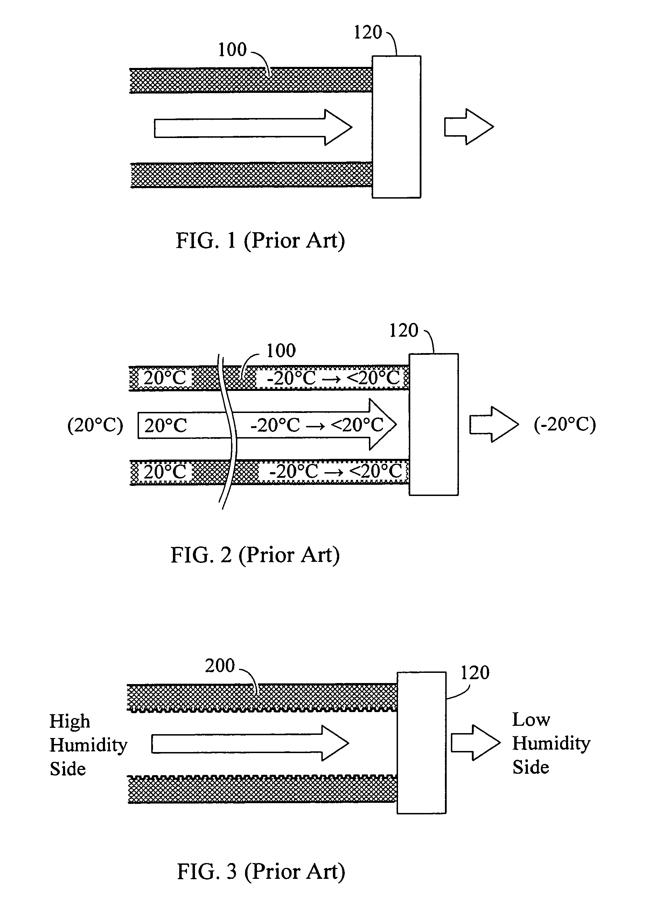

Fig. 1 is a main structure block schematic view of the conventional single flow circuit flow pumping device in fixed flow direction; it includes being applied in the heat exchange device or full heat exchange device; as shown in Fig. 1, the fluid is pumped in the fluid port at side with different temperature and discharged out of the fluid port at another side with different temperature by the unidirectional fluid pump (120), and as the fluid flow direction is fixed, the temperature difference distribution gradient inside the heat exchanger is unchanged; wherein Fig. 2 is the temperature distribution diagram of the conventional single flow directional pumping thermal fluid; in which the temperature difference between the heat exchanger and the single flow pumping fluid is gradually approached along with the accumulated time thereby gradually reducing its functions;

In addition, there is also fluid pump positive and reverse directional pumping fluid in fixed preset period; however, the temperature difference of two fluid ports differs according to the environment change, thus it has drawback of reducing the heat exchanging efficiency accordingly;

If the heat exchanger (100) as shown in Fig. 1 is replaced by the full heat exchanger (111) having heat exchange and dehumidification functions, the humidity and temperature differences between the full heat exchanger and unidirectional pumping fluid is gradually approached thereby reducing its functions; such as that Fig. 3 is a schematic view showing structure principles of the heat exchanger in Fig. 1 being replaced to the full heat exchanger having heat exchange function and dehumidification function.

### SUMMARY OF THE INVENTION

The present invention discloses that the conventional heat exchange device having fixed directional pumping fluids is improved to have the single flow-circuit operational function of periodic positive and reverse directional pumping thereby obtaining following one or more than one functions, including: 1) the temperature difference distribution status at the two ends between the fluid and the heat exchanger (100) inside the heat exchange device during heat absorbing and release operating process is changed by periodic positive and reverse directional pumping fluid to appear different flow directions thereby promoting the heat exchange efficiency of the heat exchange device; 2) for full heat exchange applications of the heat exchanger (100) being interposed or coated with permeating type or absorbing type desiccant material, or the material or structure of the heat exchanger itself being the full heat exchanger (200) having both moisture absorbing function, or the fluid piping being externally series connected with full heat exchange device, or series connected with piping having full heat exchange functions of heat exchange and moisture absorbing functions, the flow rate, or flow direction, or both of fluid is periodically manipulated to change, thereby allowing the temperature and humidity saturation degrees differences between the fluid and the heat exchanger being interposed or coated with permeating type or absorbing type desiccant material, or the temperature and humidity saturation degrees differences between the full heat exchanger (200) with its own material or structure being changed to further include moisture absorbing function and the fluid thereby promoting the full heat exchange function of the full heat exchange device for heat exchange thermal recovery and dehumidification functional operations; 3) The composition of the exchanging fluid is detected by installing the gaseous or liquid fluid composition detecting device for controlling the flow direction, or flow rate, or both of the exchanging fluid; 4) The impurities or pollutants brought in by the fluid flow at previous flow direction are discharged by the single flow circuit periodic positive and reverse directional pumping fluid thereby reducing disadvantages of impurities or pollutants accumulations at fixed flow direction.

### BRIEF DESCRIPTION OF THE DRAWINGS

Fig. 1 is a schematic view showing operating principles of the conventional heat exchange device or full heat exchange device.
Fig. 2 is the temperature distribution diagram of the conventional single flow directional pumping thermal fluid.
Fig. 3 is a schematic view showing structure principles of the heat exchanger in Fig. 1 being replaced to the full heat exchanger having both heat exchange function and dehumidification function.
Fig. 4 is the first schematic view showing structure principles of the single flow circuit heat exchange device for periodic positive and reverse directional pumping of the present invention being installed with a bidirectional fluid pump with positive and reverse pumping fluid function on one side thereof.
Fig. 5 is the temperature distribution variation diagram between the thermal fluid and the piping during the operation as shown in Fig. 4.
Fig. 6 is a schematic view showing structure principles of the heat exchanger in Fig. 4 being replaced to the full heat exchanger having both heat exchange function and dehumidification function.
Fig. 7 is the second schematic view showing structure principles of the single flow circuit heat exchange device for periodic positive and reverse directional pumping of the present invention having the bidirectional fluid pumping device being constituted by two unidirectional fluid pumps in different flow pumping directions.
Fig. 8 is the temperature distribution variation diagram between the thermal fluid and the piping during the operation as shown in Fig. 7.
Fig. 9 is a schematic view showing structure principles of the heat exchanger in Fig. 7 being replaced to the full heat exchanger having both heat exchange function and dehumidification function.
Fig. 10 is the structural principal schematic view of Fig. 6 being additional installed with the gaseous or liquid fluid composition detecting device.
Fig. 11 is the structural principal schematic view of Fig. 9 being additional installed with the gaseous or liquid fluid composition detecting device
Fig. 12 is the embodied schematic view of the present invention showing that at least one fluid pump capable of bidirectionally pumping the fluid is installed at position on either one of the fluid port (a) or the fluid port (b) of the heat exchanger.
Fig. 13 is the embodied schematic view of the present invention showing that at least one fluid pump capable of bidirectionally pumping the fluid is installed in the middle of the heat exchanger.
Fig. 14 is the embodied schematic view of the present invention showing that at least two fluid pumps capable of bidirectionally pumping the fluid are respectively installed on the fluid port (a) and the fluid port (b) at the two ends of the heat exchanger.
Fig. 15 is the embodied schematic view of the present invention showing that at least two unidirectional fluid pumps in different pumping directions being series connected to constitute the bidirectional fluid pumping device are installed at position on either one of the fluid port (a) or the fluid port (b) of the heat exchanger.
Fig. 16 is the embodied schematic view of the present invention showing that at least two unidirectional fluid pumps in different pumping directions being series connected to constitute the bidirectional fluid pumping device are installed at the middle section of the heat exchanger.
Fig. 17 is the embodied schematic view of the present invention showing that at least two unidirectional fluid pumps in different pumping directions being series connected to constitute the bidirectional fluid pumping device are installed on the fluid port (a) and the fluid port (b) at the two ends of the heat exchanger.
Fig. 18 is the embodied schematic view of the present invention showing that at least two unidirectional fluid pumps in different pumping directions being parallel connected to constitute the bidirectional fluid pumping device are installed at position on either one of the fluid port (a) and the fluid port (b) of the heat exchanger.
Fig. 19 is the embodied schematic view of the present invention showing that at least two unidirectional fluid pumps in different pumping directions being parallel connected to constitute the bidirectional fluid pumping device are installed at the middle section of the heat exchanger.
Fig. 20 is the embodied schematic view of the present invention showing that at least two unidirectional fluid pumps in different pumping directions being parallel connected to constitute the bidirectional fluid pumping device are installed on the fluid port (a) and the fluid port (b) at the two ends of the heat exchanger.
Fig. 21 is the embodied schematic view showing that the present invention is constituted by at least one unidirectional fluid pump and four controllable switch type fluid valves in bridge type, and is installed at position on either one of the fluid port (a) or the fluid port (b) of the heat exchanger.
Fig. 22 is the embodied schematic view showing that the present invention is constituted by at least one unidirectional fluid pump and four controllable switch type fluid valves in bridge type, and is installed at middle section of the heat exchanger.
Fig. 23 is the embodied schematic view showing that the present invention is constituted by at least two unidirectional fluid pumps and four controllable switch type fluid valves in bridge type, and is installed on the fluid port (a) and the fluid port (b) at the two ends of the heat exchanger.

### DESCRIPTION OF MAIN COMPONENT SYMBOLS

11: Temperature detecting device
21: Humidity detecting device
31: Gaseous or liquid fluid composition detecting device
100: Heat exchanger
120: Unidirectional fluid pump
123: Bidirectional fluid pumping device
200: Full heat exchanger
126: Unidirectional valve
129, 129': Fluid valve
250: Periodic fluid direction-change operative control device
300: Power Source
a, b: Fluid port

### DETAILED DESCRIPTION OF THE PREFERRED EMBODIMENTS

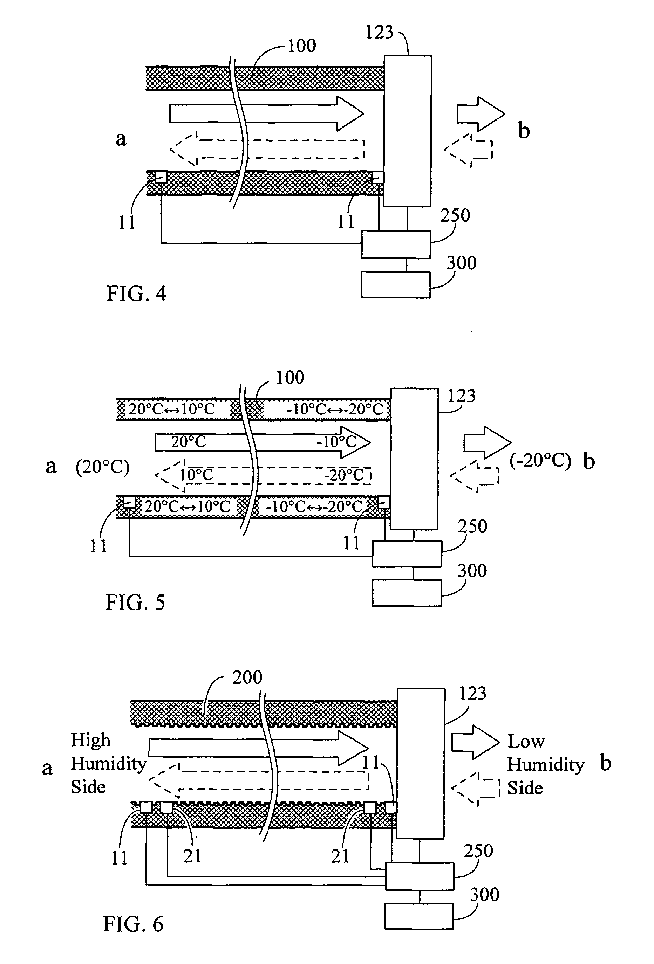

Fig. 4 is the first schematic view showing structure principles of the single flow circuit heat exchange device for periodic positive and reverse directional pumping of the present invention being installed with a bidirectional fluid pump with positive and reverse pumping fluid function on one side thereof.

The single flow circuit heat exchange device for periodic positive and reverse directional pumping of the present invention is further installed a bidirectional fluid pump with positive and reverse directional pumping function to one end of the conventional heat exchange device for constituting the bidirectional fluid pumping device (123), and installed with the periodic fluid direction-change operative control device (250) for operatively controlling the bidirectional fluid pumping device (123) so as to make the fluid originally pumped in fixed flow direction appear periodically alternately flow directional change; wherein:
-- The bidirectional fluid pumping device (123): It is constituted by 1) the fluid pumping device capable of producing positive pressure to push fluid; or 2) the fluid pumping device capable of producing negative pressure to attract fluid; or 3) the fluid pumping device having both functions of producing positive pressure to push fluid and negative pressure to attract fluid for pumping gaseous or liquid state fluids, wherein the fluid pump is driven by electric motor, engine power, or mechanical or electric power converted from other wind power, thermal energy, temperature-difference energy, or solar energy, etc;
-- The heat exchanger (100): It is the heat exchanger having internal flow channels with heat absorbing/release capability, and is configured to generate heat absorbing/release function to fluid when pumping fluid passing through;
-- Power source (300): It provides for operation, including AC or DC city power system or standalone electric power supplying devices;
-- The periodic fluid direction-change operative control device (250): It is constituted by electromechanical components, solid state electronic components, or microprocessors and relevant software and operative control interfaces to operatively control the bidirectional fluid pumping device (123) for periodically changing the flow direction of the fluid passing through the heat exchange device thereby operatively controlling the temperature difference distribution status between the fluid and the heat exchanger (100) in the heat exchange device;

The timings for fluid for periodic flow direction change are that 1) the pumping direction of the bidirectional fluid pumping device (123) is manually operatively controlled, 2) the pumping direction of the bidirectional fluid pumping device (123) is operatively controlled by the periodic fluid direction-change operative control device (250) through setting time period according to temperature variations, or 3) the at least one temperature detecting device (11) is installed at position capable of directly or indirectly detecting the temperature variation of fluid, wherein the detecting signals of the temperature detecting device (11) are transmitted to the periodic fluid direction-change operative control device (250), so as when the setting temperature is reached, the pumping direction of the bidirectional fluid pumping device (123) is operatively controlled to pump the fluid in reverse flow direction.

Fig. 5 is the temperature distribution variation diagram between the thermal fluid and the piping during the operation as shown in Fig. 4.

As shown in Fig. 5 is to operatively control the fluid passing through the heat exchanger (100) installed in the heat exchange device for periodically changing fluid pumping direction; take the heat exchange device for indoor-outdoor air change in cold winter times as example, wherein the higher indoor temperature air flow is pumped through the heat exchange device via fluid port (a) and is discharged to outdoors via fluid port (b) of heat exchanger by the bidirectional fluid pumping device (123) driven by the power of power source (300), the heat exchanger (100) of the heat exchange device is then gradually formed with a temperature distribution from high temperature at fluid port (a) to the lower temperature at fluid port (b), and it is through that 1) the pumping direction of the bidirectional fluid pumping device (123) is manually operatively controlled, or 2) the pumping direction of the bidirectional fluid pumping device (123) is operatively controlled by the periodic fluid direction-change operative control device (250) through setting time period according to temperature variations, or 3) the at least one temperature detecting device (11) is installed at position capable of directly or indirectly detecting the temperature variation of fluid, wherein the detecting signals of the temperature detecting device (11) are transmitted to the periodic fluid direction-change operative control device (250), so as when the heat exchanger (100) reaches setting temperature, the pumping direction of the bidirectional fluid pumping device (123) is operatively controlled to pump the fluid in reverse flow direction, and the fluid of outdoor lower temperature fresh air is pumped to the heat exchange device via fluid port (b) and is charged to indoors via fluid port (a), and the heat exchanger (100) of the heat exchange device is then gradually formed with a temperature distribution from lower temperature at fluid port (b) to the higher temperature at fluid port (a), so that temperature distribution status on the heat exchanger (100) is changed by the periodic positive and reverse directional pumping fluid.

Fig. 6 is a schematic view showing structure principles of the heat exchanger in Fig. 4 being replaced to the full heat exchanger having both heat exchange function and dehumidification function.

Fig. 6 shows that the device for periodic positive and reverse directional pumping fluid as shown in Fig. 4 being applied for the full heat exchange device (200) having the heat exchanger being interposed or coated with permeating type or absorbing type desiccant material, or the heat exchanger of the full heat exchanger itself being made of material or structure further having moisture absorbing function is through that 1) the pumping direction of the bidirectional fluid pumping device (123) is manually operatively controlled, or 2) the pumping direction of the bidirectional fluid pumping device (123) is operatively controlled by the periodic fluid direction-change operative control device (250) through setting time period according to temperature variations, or setting time period according to humidity variations, or setting time period according to temperature and humidity variations simultaneously, or 3) the at least one temperature detecting device (11) and at least one humidity detecting device (21) are installed at position capable of directly or indirectly detecting the temperature variation and humidity variation of fluid, which includes being installed with both or at least one detecting device, wherein the detecting signals of the temperature detecting device (11) and the humidity detecting device (21) are transmitted to the periodic fluid direction-change operative control device (250), so as when the full heat exchanger (200) reaches both or either one of the setting temperature or setting humidity, the pumping direction of the bidirectional fluid pumping device (123) is operatively controlled to pump the fluid in reverse flow direction; the aforesaid fluid having two different flow directions for passing through the full heat exchanger (200) inside the heat exchange device changes the distribution status of the temperature and humidity saturation degree differences between the fluid and the full heat exchanger along with the flow direction of the fluid;

Said temperature detecting device (11) and the humidity detecting device (21) can be in an integral structure or separated installed.

Further, the single flow circuit heat exchange device for periodic positive and reverse directional pumping of the present invention can be selected to constitute the function of the bidirectional fluid pumping device (123) by two series-connected unidirectional fluid pumps at different pumping directions;

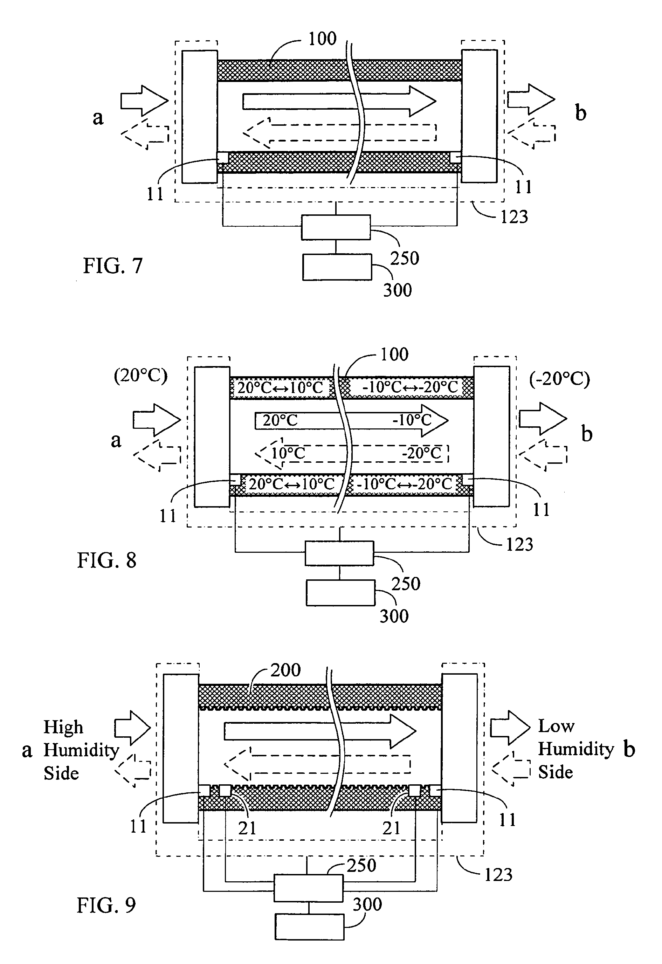

Fig. 7 is the second schematic view showing structure principles of the single flow circuit heat exchange device having the bidirectional fluid pumping device being constituted by two unidirectional fluid pumps in different flow pumping directions;

As shown in Fig. 7 is to replace the fluid pump with positive and reverse directional pumping function of Fig. 4 by two reverse installed unidirectional fluid pumps (120) to pump by turns, which are installed at the two ends of the heat exchanger (100) to constituted the function of the bidirectional fluid pumping device (123), and thereby being subject to the operative control of the periodic fluid direction-change operative control device (250), wherein the operational principal and the control timing are the same with that of the embodiment shown in Fig. 4.

Fig. 8 is the temperature distribution variation diagram between the thermal fluid and the piping during the operation as shown in Fig. 7

As shown in Fig. 8 is to operatively control the fluid passing through the heat exchanger (100) installed in the heat exchange device for periodically changing fluid pumping direction; take the heat exchange device for indoor-outdoor air change in cold winter times as example, wherein during the operation of the heat exchanger, the higher indoor temperature air flow is pumped through the heat exchanger (100) via fluid port (a) and is discharged to outdoors via fluid port (b) by the bidirectional fluid pumping device (123) driven by the power of power source (300), the heat exchanger (100) of the heat exchange device is then gradually formed with a temperature distribution from high temperature at fluid port (a) to the lower temperature at fluid port (b), it is then further through that 1) the pumping direction of the bidirectional fluid pumping device (123) is manually operatively controlled, or 2) the pumping direction of the bidirectional fluid pumping device (123) is operatively controlled by the periodic fluid direction-change operative control device (250) through setting time period according to temperature variations, or 3) the at least one temperature detecting device (11) is installed at position capable of directly or indirectly detecting the temperature variation of fluid, wherein the detecting signals of the temperature detecting device (11) are transmitted to the periodic fluid direction-change operative control device (250), so that when the heat exchanger (100) reaches setting temperature, the pumping direction of the bidirectional fluid pumping device (123) is operatively controlled to pump the fluid in reverse flow direction, and the fluid of outdoor lower temperature fresh air is pumped to the heat exchange device via fluid port (b) and is charged to indoors via fluid port (a), and the heat exchanger (100) of the heat exchange device is then gradually formed with a temperature distribution from lower temperature at fluid port (b) to the higher temperature at fluid port (a), so that temperature distribution status on the heat exchanger (100) is changed by the periodic positive and reverse directional pumping fluid.

Fig. 9 is a schematic view showing structure principles of the heat exchanger in Fig. 7 being replaced to the full heat exchanger having both heat exchange function and dehumidification function.

Fig. 9 shows that the device for periodic positive and reverse directional pumping fluid as shown in Fig. 7 being applied for the full heat exchange device (200) having the heat exchanger being interposed or coated with permeating type or absorbing type desiccant material, or for the heat exchanger of the full heat exchanger itself being made of material or structure further having moisture absorbing function is through that 1) the pumping direction of the bidirectional fluid pumping device (123) is manually operatively controlled, or 2) the pumping direction of the bidirectional fluid pumping device (123) is operatively controlled by the periodic fluid direction-change operative control device (250) through setting time period according to temperature variations, or setting time period according to humidity variations, or setting time period according to temperature and humidity variations simultaneously, or 3) the at least one temperature detecting device (11) and at least one humidity detecting device (21) are installed at position capable of directly or indirectly detecting the temperature variation and humidity variation of fluid, which includes being installed with both or at least one detecting device, wherein the detecting signals of the temperature detecting device (11) and the humidity detecting device (21) are transmitted to the periodic fluid direction-change operative control device (250), so that when the full heat exchanger (200) reaches both or either one of the setting temperature and setting humidity, the pumping direction of the bidirectional fluid pumping device (123) is operatively controlled to pump the fluid in reverse flow direction; the aforesaid fluid having two different flow directions for passing through the full heat exchanger (200) inside the heat exchange device changes the distribution status of the temperature and humidity saturation degree differences between the fluid and the full heat exchanger along with the flow direction of the fluid;

Said temperature detecting device (11) and the humidity detecting device (21) can be in an integral structure or separated installed.

For the single flow-circuit heat exchange device for periodic positive and reverse directional pumping of the present invention further can be installed with all or at least one or more than one detecting device of temperature detecting device (11), humidity detecting device (21), and gaseous or liquid fluid composition detecting device (31) on the heat exchange device (1000), heat exchanger (100) or total heat exchanger (200) at positions near both or one of the fluid port (a) and fluid port (b), or at other positions capable of detecting exchanging fluids, wherein the number of aforementioned detecting devices can be one or more than one to provide the detected signal as the reference for the operation of one or more than one functions as follows, including: 1) as the reference for operatively controlling the periodic switch timing of fluid flowing direction pumped by the bi-directional fluid pumping devices (123); or 2) as the reference for operatively controlling the bi-directional fluid pumping devices (123) to control the speed or the flow rate of the pumping fluid; or 3) as the reference for operatively controlling the open volume of the fluid valve to control the speed or the flow rate of the pumping fluid;

For the aforementioned temperature detecting device (11), humidity detecting device (21), and the gaseous or liquid fluid composition detecting device (31), all detecting devices can be in an integral structure, or partial detecting devices are in an integral structure, or each detecting device is separated installed.

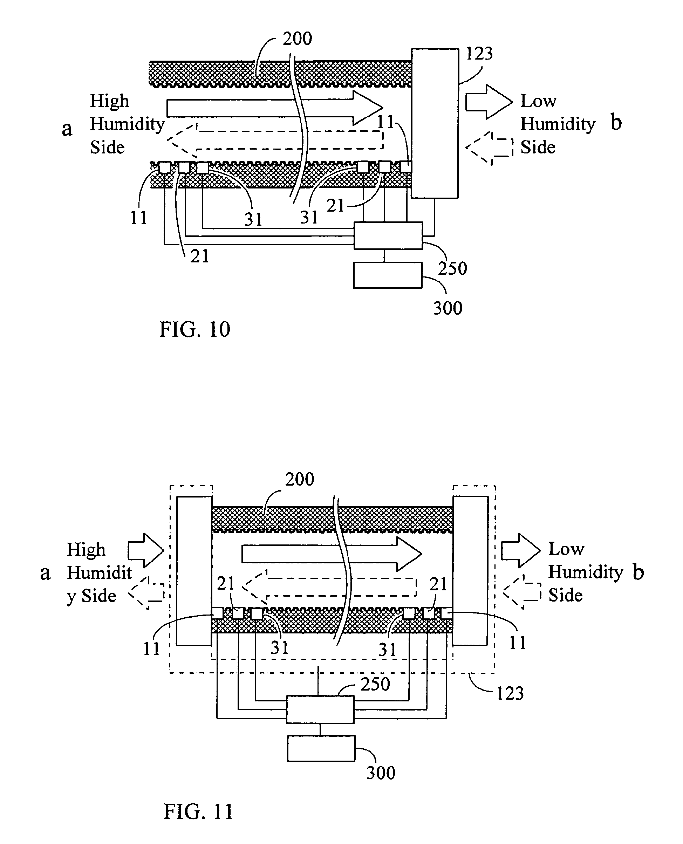

As shown in Fig. 10 is the structural principal schematic view of Fig. 6 being additional installed with the gaseous or liquid fluid composition detecting device.

Fig. 10 shows that the bi-directional fluid pumping device (123) is constituted by the bidirectional fluid pump with positive and reverse directional pumping function being installed on single side as shown in Fig. 6 for coupling to one end of the full heat exchange device (200) having the heat exchanger being interposed or coated with permeating type or absorbing type desiccant material, or the heat exchanger of the full heat exchanger itself being made of material or structure further having moisture absorbing function is through that 1) the pumping direction of the bidirectional fluid pumping device (123) is manually operatively controlled, or 2) the pumping direction of the bidirectional fluid pumping device (123) is operatively controlled by the periodic fluid direction-change operative control device (250) through setting time period according to temperature variations, or setting time period according to humidity variations, or setting time period according to temperature and humidity variations simultaneously, or 3) the at least one temperature detecting device (11), at least one humidity detecting device (21), and at least one gaseous or liquid fluid composition detecting device (31) are installed at position capable of directly or indirectly detecting the temperature variation, humidity variation, and gaseous or liquid fluid composition variation, which includes being installed with all three or at least one detecting device, wherein the detecting signals of the temperature detecting device (11), or the humidity detecting device (21), or the gaseous or liquid fluid composition detecting device (31) are transmitted to the periodic fluid direction-change operative control device (250), so that the pumping direction of the bidirectional fluid pumping device (123) being constituted by the bidirectional fluid pump with positive and reverse directional pumping function being installed on single side is operatively controlled to pump the fluid in reverse flow direction; the aforesaid fluid having two different flow directions for passing through the full heat exchanger (200) inside the heat exchange device changes the distribution status of the temperature and humidity saturation degree differences between the fluid and the full heat exchanger along with the flow direction of the fluid;

As shown in Fig. 11 is the structural principal schematic view of Fig. 9 being additional installed with the gaseous or liquid fluid composition detecting device.

Fig. 11 shows that the bi-directional fluid pumping device (123) is constituted by the unidirectional fluid pumps (120) on both sides that pump in reverse direction by turns as shown in Fig. 9 for coupling to both ends of the full heat exchange device (200) having the heat exchanger being interposed or coated with permeating type or absorbing type desiccant material, or for the heat exchanger of the full heat exchanger itself being made of material or structure further having moisture absorbing function is through that 1) the pumping direction of the bidirectional fluid pumping device (123) is manually operatively controlled, or 2) the pumping direction of the bidirectional fluid pumping device (123) is operatively controlled by the periodic fluid direction-change operative control device (250) through setting time period according to temperature variations, or setting time period according to humidity variations, or setting time period according to temperature and humidity variations simultaneously, or 3) the at least one temperature detecting device (11), at least one humidity detecting device (21), and at least one gaseous or liquid fluid composition detecting device (31) are installed at position capable of directly or indirectly detecting the temperature variation, humidity variation, and gaseous or liquid fluid composition variation, which includes being installed with all three or at least one detecting device, wherein the detecting signals of the temperature detecting device (11), or the humidity detecting device (21), or the gaseous or liquid fluid composition detecting device (31) are transmitted to the periodic fluid direction-change operative control device (250), so that the pumping direction of the bidirectional fluid pumping device (123) being constituted by the unidirectional fluid pumps (120) on both sides that pump in reverse direction by turns is operatively controlled to pump the fluid in reverse flow direction; the aforesaid fluid having two different flow directions for passing through the full heat exchanger (200) inside the heat exchange device changes the distribution status of the temperature and humidity saturation degree differences between the fluid and the full heat exchanger along with the flow direction of the fluid;

Said temperature detecting device (11), humidity detecting device (21), and gaseous or liquid fluid composition detecting device (31) can be in an integral structure or separated installed.

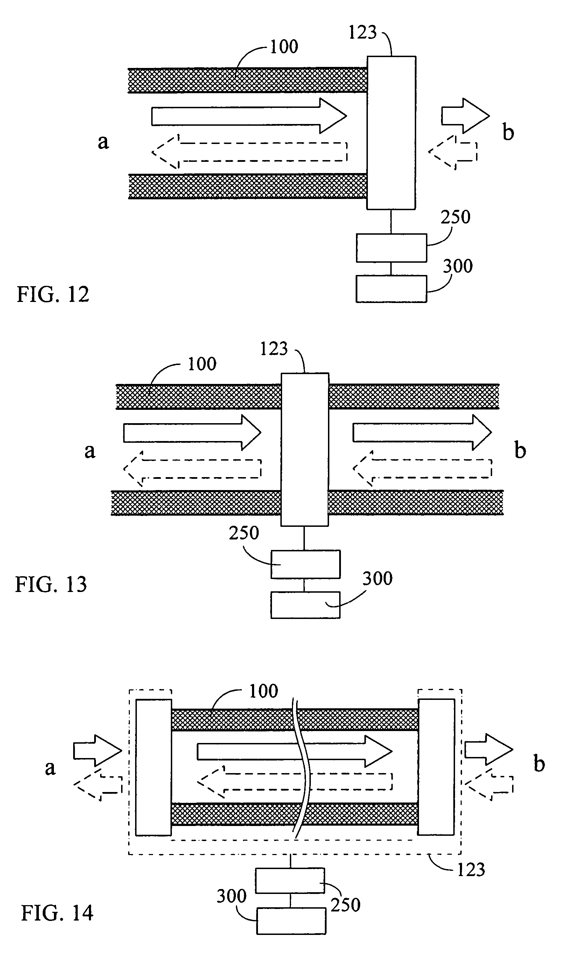

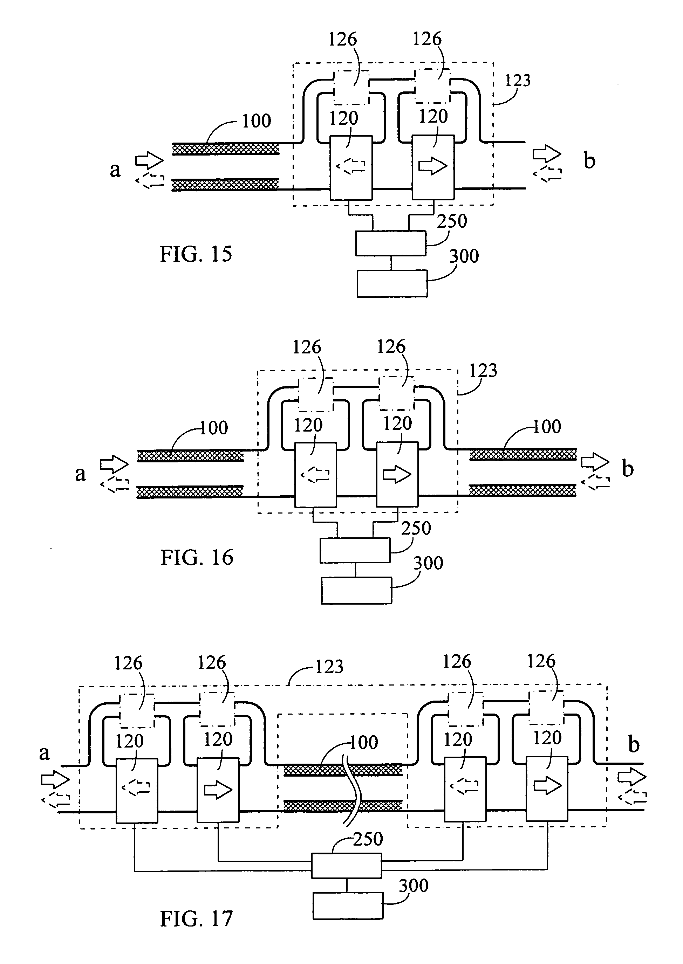

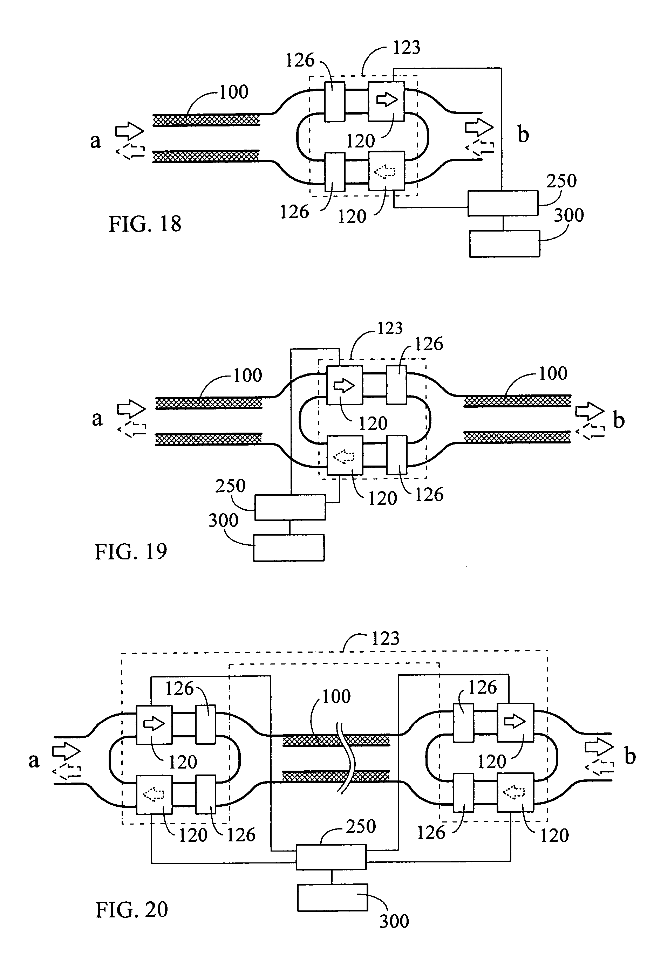

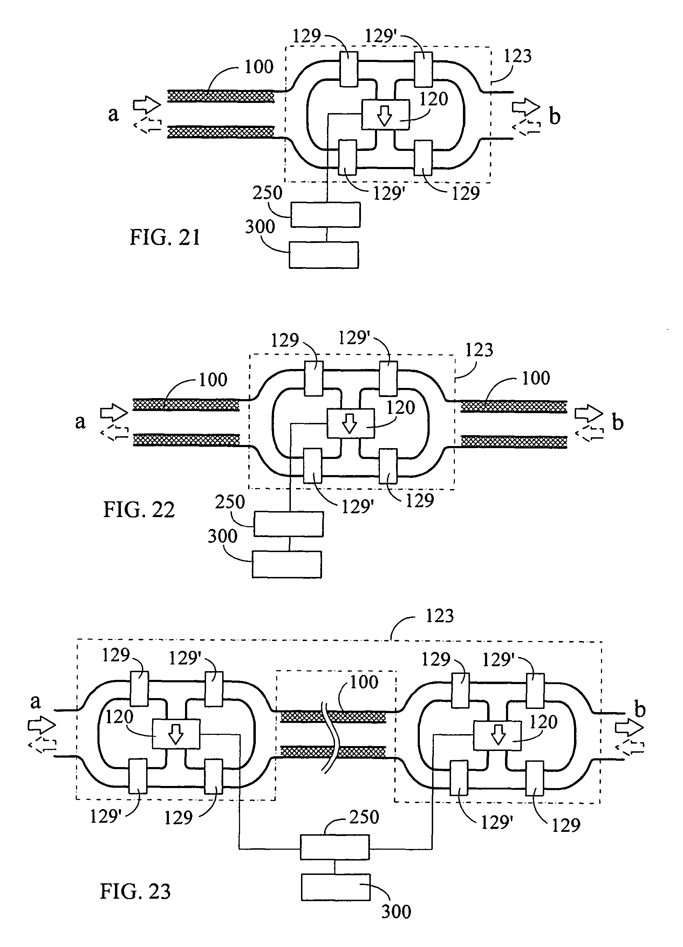

According to above said definitions on operating functions, the selectable but not for limiting embodiments of the bidirectional fluid pumping device (123) of the single flow circuit heat exchange device for periodic positive and reverse directional pumping of the present invention comprises one ore more than one structures as follows, including:
1. It is by adopting at least one fluid pump capable of bidirectionally pumping the fluid installed at position on either the fluid port (a) or the fluid port (b) of the heat exchanger (100) to operatively control the bidirectional fluid pump to periodic pump in positive or reverse directions by the periodic fluid direction-change operative control device (250) thereby periodically changing the fluid direction; as shown in Fig. 12 is the embodied schematic view of the present invention showing that at least one fluid pump capable of bidirectionally pumping the fluid is installed at position on either the fluid port (a) or the fluid port (b) of the heat exchanger;
2. It is by adopting at least one fluid pump capable of bidirectionally pumping the fluid installed in the middle of the heat exchanger (100) to operatively control the bidirectional fluid pump to periodic pump in positive or reverse directions by the periodic fluid direction-change operative control device (250) thereby periodically changing the fluid direction; as shown in Fig. 13 is the embodied schematic view of the present invention showing that at least one fluid pump capable of bidirectionally pumping the fluid is installed in the middle of the heat exchanger;
3. It is by adopting at least two fluid pumps capable of bidirectionally pumping the fluid respectively installed on the fluid port (a) and the fluid port (b) at the two ends of the heat exchanger (100) and by means of the periodic fluid direction-change operative control device (250) to operatively control the bidirectional fluid pump to allow the single flow circuit heat exchange device for periodic positive and reverse directional pumping of the present invention having one or more than one operational functions as follows, including: 1) the operation of simultaneously pumping in the same direction as well as simultaneously changing the pumping direction periodically, or 2) one of the fluid pumps capable of bidirectionally pumping the fluid respectively installed on the fluid port (a) and the fluid port (b) are alternately to pump in different directions; as shown in Fig. 14 is the embodied schematic view of the present invention showing that at least two fluid pumps capable of bidirectionally pumping the fluid are respectively installed on the fluid port (a) and the fluid port (b) at the two ends of the heat exchanger;
4. It is by adopting at least two unidirectional fluid pumps (120) in different pumping directions in series connection to constitute the bidirectional fluid pumping device being installed as position on either one of the fluid port (a) or the fluid port (b) of the heat exchanger (100) thereby by the operative control of the periodic fluid direction-change operative control device (250) to alternately use one of the unidirectional fluid pump (120) in one direction to pump periodically, thereby periodically changing the fluid direction, wherein if the unidirectional fluid pump (120) constituting the bidirectional fluid pumping device (123) is irreversible, the individual unidirectional fluid pump can respectively parallel connect with a reversible unidirectional valve (126); as shown in Fig. 15 is the embodied schematic view of the present invention showing that at least two unidirectional fluid pumps in different pumping directions being series connected to constitute the bidirectional fluid pumping device are installed at position on either one of the fluid port (a) or the fluid port (b) at one end of the heat exchanger;
5. It is by adopting at least two unidirectional fluid pumps (120) in different pumping directions in series connection to constitute the bidirectional fluid pumping device being installed at the middle section of the heat exchanger (100) thereby by the operative control of the periodic fluid direction-change operative control device (250) to alternately use one of the unidirectional fluid pump in one direction to pump periodically, thereby periodically changing the fluid direction, wherein if the unidirectional fluid pump (120) constituting the bidirectional fluid pump device (123) is irreversible, the individual unidirectional fluid pump can respectively parallel connect with a reversible unidirectional valve (126); as shown in Fig. 16 is the embodied schematic view of the present invention showing that at least two unidirectional fluid pumps in different pumping directions being series connected to constitute the bidirectional fluid pumping device are installed at the middle section of the heat exchanger;
6. It is by adopting at least two unidirectional fluid pumps (120) in different pumping directions in series connection to constitute the bidirectional fluid pumping device being installed on the fluid port (a) and the fluid port (b) at the two ends of the heat exchanger (100) and by means of the periodic fluid direction-change operative control device (250) to operatively control the unidirectional fluid pumps (120) in different pumping directions and to allow the single flow circuit heat exchange device for periodic positive and reverse directional pumping of the present invention having one or more than one operational functions as follows, including: 1) the operation of simultaneously pumping in the same direction as well as simultaneously changing the pumping direction periodically, or 2) the unidirectional fluid pumps (120) in different pumping directions being respectively installed on the fluid port (a) and the fluid port (b) are subject to the operative control of the periodic fluid direction-change operative control device (250) to alternately pump by one of the unidirectional fluid pump in one direction periodically, thereby periodically changing the fluid direction, wherein if the unidirectional fluid pump constituting the bidirectional fluid pump device (123) is irreversible, the individual unidirectional fluid pump can respectively parallel connect with a reversible unidirectional valve (126); as shown in Fig. 17 is the embodied schematic view of the present invention showing that at least two unidirectional fluid pumps in different pumping directions being series connected to constitute the bidirectional fluid pumping device are installed on the fluid port (a) and the fluid port (b) at the two ends of the heat exchanger;
7. It is by adopting at least two unidirectional fluid pumps (120) in different pumping directions in parallel connection to constitute the bidirectional fluid pumping device being installed at position on either one of the fluid port (a) and the fluid port (b) of the heat exchanger (100) thereby by the operative control of the periodic fluid direction-change operative control device (250) to periodically operatively control one of the unidirectional fluid pumps (120) to pump alternately, thereby periodically changing the fluid direction, wherein if the structure of the adopted unidirectional fluid pump (120) does not have the anti-reverse flow function, the individual fluid pump can firstly respectively series connect with a unidirectional valve (126) in forward polarity before being parallel connected to avoid reverse flows; as shown in Fig. 18 is the embodied schematic view of the present invention showing that at least two unidirectional fluid pumps in different pumping directions being parallel connected to constitute the bidirectional fluid pumping device are installed at position on either one of the fluid port (a) and the fluid port (b) at one end of the heat exchanger;
8. It is by adopting at least two unidirectional fluid pumps (120) in different pumping directions in parallel connection to constitute the bidirectional fluid pumping device being installed at the middle section of the heat exchanger (100) thereby by the operative control of the periodic fluid direction-change operative control device (250) to periodically operatively control one of the unidirectional fluid pumps (120) to pump alternately, thereby periodically changing the fluid direction, wherein if the structure of the unidirectional fluid pump (120) used by the bidirectional fluid pumping device (123) does not have the anti-reverse flow function, the individual fluid pump can firstly respectively series connect with a unidirectional valve (126) in forward polarity before being parallel connected to avoid reverse flows; as shown in Fig. 19 is the embodied schematic view of the present invention showing that at least two unidirectional fluid pumps in different pumping directions being parallel connected to constitute the bidirectional fluid pumping device are installed at the middle section of the heat exchanger;
9. It is by adopting at least two unidirectional fluid pumps (120) in different pumping directions in parallel connection to constitute the bidirectional fluid pumping device being installed on the fluid port (a) and the fluid port (b) at the two ends of the heat exchanger (100) and by means of the periodic fluid direction-change operative control device (250) to operatively control the unidirectional fluid pumps in different pumping directions and to allow the single flow circuit heat exchange device for periodic positive and reverse directional pumping of the present invention having one or more than one operational functions as follows, including: 1) the operation of simultaneously pumping in the same direction as well as simultaneously changing the pumping direction periodically, or 2) the unidirectional fluid pumps (120) in different pumping directions being respectively installed on the fluid port (a) and the fluid port (b) are by the operative control of the periodic fluid direction-change operative control device (250) to periodically pump by one of the unidirectional fluid pump in one direction alternately, thereby periodically changing the fluid direction, wherein if the unidirectional fluid pump (120) is irreversible, the individual unidirectional fluid pump can respectively parallel connect with a reversible unidirectional valve (126); as shown in Fig. 20 is the embodied schematic view of the present invention showing that at least two unidirectional fluid pumps in different pumping directions being parallel connected to constitute the bidirectional fluid pumping device are installed on the fluid port (a) and the fluid port (b) at the two ends of the heat exchanger;
10. It is constituted by at least one unidirectional fluid pump (120) and four controllable switch type fluid valves (129, 129') in bridge type combination, and is installed at position on either one of the fluid port (a) or the fluid port (b) of the heat exchanger (100) thereby to alternately operative control two fluid valves (129) to open and the other two fluid valves (129') to close or two fluid valves (120) to close and the other two fluid valves (129') to close by the periodic fluid direction-change operative control device (250) during the operation of the unidirectional fluid pump (120), thereby periodically changing the fluid directions; as shown in Fig. 21 is the embodied schematic view showing that the present invention is constituted by at least one unidirectional fluid pump and four controllable switch type fluid valves in bridge type, and is installed at position on either one of the fluid port (a) or the fluid port (b) at one end of the heat exchanger;
11. It is constituted by at least one unidirectional fluid pump (120) and four controllable switch type fluid valves (129, 129') in bridge type combination, and is installed at middle section of the heat exchanger (100) thereby to alternately operative control two fluid valves (129) to open and the other two fluid valves (129') to close or two fluid valves (120) to close and the other two fluid valves (129') to close by the periodic fluid direction-change operative control device (250) during the operation of the unidirectional fluid pump (120), thereby periodically changing the fluid directions; as shown in Fig. 22 is the embodied schematic view showing that the present invention is constituted by at least one unidirectional fluid pump and four controllable switch type fluid valves in bridge type, and is installed at middle section of the heat exchanger;
12. It is constituted by at least two unidirectional fluid pumps (120) and four controllable switch type fluid valves (129, 129') in bridge type combination, and is installed on the fluid port (a) and the fluid port (b) at two ends of the heat exchanger (100) thereby to alternately operative control two fluid valves (129) to open and the other two fluid valves (129') to close or two fluid valves (120) to close and the other two fluid valves (129') to close by the periodic fluid direction-change operative control device (250) during the operation of the unidirectional fluid pump (120), thereby periodically changing the fluid directions; as shown in Fig. 23 is the embodied schematic view showing that the present invention is constituted by at least two unidirectional fluid pumps and four controllable switch type fluid valves in bridge type, and is installed on the fluid port (a) and the fluid port (b) at the two ends of the heat exchanger.

Said periodic fluid direction-change operative control device (250) of the single flow circuit heat exchange device for periodic positive and reverse directional pumping of the present invention is equipped with electric motor, or controllable engine power, or mechanical or electric power generated or converted from other wind energy, thermal energy, temperature-difference energy, or solar energy for controlling various fluid pumps for driven, or controlling the operation timing of the fluid pumps or fluid valves, thereby changing the direction of the two circuits passing through the heat exchanger (100) and further to operatively control partial or all functions of modulation including the rotational speed, flow rate, fluid pressure of various fluid pumps thereof.

For the aforementioned single flow-circuit heat exchange device for periodic positive and reverse directional pumping of the present invention, in the operation of periodically positive and reverse directional pumping fluid, it is further through the periodic fluid direction-change operative control device (250) to manipulate the flow rate of fluid pumped by the bi-directional pumping device (123), wherein the operational modes include one or more than one types as follows, including:
**1)** the flow rate of pumping fluid is adjusted or set manually;
**2)** the flow rate of fluid is operatively controlled by referring to the detected signal of the at least one temperature detecting device;
**3)** the flow rate of fluid is operatively controlled by referring to the detected signal of the at least one moisture detecting device;
**4)** the flow rate of fluid is operatively controlled by referring to the detected signal of the at least one gaseous or liquid fluid composition detecting device;
**5)** the flow rate of the fluid is jointly operatively controlled by two or more than two said 1)∼4) items.

The single flow-circuit heat exchange device for periodic positive and reverse directional pumping of the present invention when installed with the function of operatively controlling the flow rate, the flow rate range of the controlled fluid is between stop delivery to the maximum delivering volume, and the flow rate of fluid is manipulated in stepped or stepless according to the operational requirements, wherein it is further by following one or more than one devices to change the flow rate of fluid, including:
**1)** to operatively control the rotational speed in pumping operation of bi-directional pumping device (123) from idling to the maximum speed range, thereby to further operatively control the flow rate of fluid;
**2)** by adopting the bi-directional pumping device (123) with controllable fluid valve inlet/outlet to operatively control the open volume of the fluid valve inlet/outlet of the bi-directional pumping device (123), thereby to further operatively control the flow rate of fluid;
**3)** by adopting the unidirectional valve (126) with controllable fluid valve inlet/outlet to operatively control the open volume of the fluid valve inlet/outlet of the unidirectional valve (126), thereby to further operatively control the flow rate of fluid;
**4)** by adopting the fluid valve (129) and fluid valve (129') with controllable fluid valve inlet/outlet to operatively control the open volume of the fluid valve inlet/outlet of the fluid valve (129) and fluid valve (129'), thereby to further operatively control the flow rate of fluid;
**5)** by operatively controlling at least one of devices in item 1)∼4) to intermittingly pumping fluid, thereby to modulate the average flow rate by the time ratio of pumping and stop pumping.

For the aforementioned single flow-circuit heat exchange device for periodic positive and reverse directional pumping of the present invention, the flow rate ratio of the two flow circuits passing through the heat exchanger (100) or the total heat exchanger (200) during the operation can be one or more than one ratio modes as follows, including:
**1)** In the operation of periodically positive and reverse directional pumping fluid, the flow rate of fluid in one direction is greater than that of fluid in the other direction;
**2)** In the operation of periodically positive and reverse directional pumping fluid, the flow rates of the fluid in two directions are the same.

For the aforementioned single flow-circuit heat exchange device for periodic positive and reverse directional pumping of the present invention, in the operation of periodically positive and reverse directional pumping fluid, the pumping periodic mode includes one or more than one type as follows, including:
**1)** In the operation of periodically positive and reverse directional pumping fluid, the operational time of positive direction and reverse direction are the same;
**2)** In the operation of periodically positive and reverse directional pumping fluid, the operational time of positive direction and reverse direction are different;
**3)** The mixed mode of both item 1) and 2).

For the aforementioned single flow-circuit heat exchange device for periodic positive and reverse directional pumping of the present invention, except for the function of periodically positive and reverse directional pumping operation, it further simultaneously has one ore more than one special operational modes, including:
**1)** The fluid of two flow circuits pumps in fluid in the same flowing direction;
**2)** The fluid of two flow circuits pumps out fluid in the reverse flowing direction.

The function of the same directional pumping of aforementioned two flow circuits can be applied for the requirement to emergently increase the flow rate of fluid pumping in or pumping out.

The heat exchanger or full heat exchanger of the single flow circuit heat exchange device for periodic positive and reverse directional pumping of the present invention is embodied to have the following characteristics: 1) it is of the tubular structure in linear or other geometric shapes; 2) it is constituted by the multi-layer structure having fluid path for passing gaseous or liquid state fluids; or 3) it is constituted by a plurality of single flow path heat exchange device with one or more than one fluid path in series connection, parallel connection or series and parallel connection.

For the single flow circuit heat exchange device for periodic positive and reverse directional pumping of present invention, in the operation of flow direction change, to mitigate the impact generated by the gaseous or liquid state fluid in the course of pump when the fluid being intercepted at sudden, including the liquid hammer effect generated when the pumping liquid state fluid being interrupted, one or more than one operational methods as follows can be further added to the operational modes of the flow direction change control:
**1)** In the operation of fluid flow direction change, it is through the operatively control of the fluid pump or fluid valve to slowly reduce the flow rate of fluid, then to be switched to slowly increase the flow rate of fluid to a maximum preset value in the other flow direction;
**2)** In the operation of fluid flow direction change, it is through the operatively control of the fluid pump or fluid valve to slowly reduce the flow rate of fluid, and to be switched to stop pumping for a preset time period, then further to be switched to slowly increase the flow rate of fluid to a maximum preset value in the other flow direction.

## Claims

1. A single flow circuit heat exchange device for periodic positive and reverse directional pumping, which is installed a bidirectional fluid pump with positive and reverse directional pumping function to one end of the heat exchange device for constituting the bidirectional fluid pumping device (123), and installed with the periodic fluid direction-change operative control device (250) for operatively controlling the bidirectional fluid pumping device (123) so as to make the fluid originally pumped in fixed flow direction appear periodically alternately flow directional change; wherein:
-- The bidirectional fluid pumping device (123): It is constituted by 1) the fluid pumping device capable of producing positive pressure to push fluid; or 2) the fluid pumping device capable of producing negative pressure to attract fluid; or 3) the fluid pumping device having both functions of producing positive pressure to push fluid and negative pressure to attract fluid for pumping gaseous or liquid state fluids, wherein the fluid pump is driven by electric motor, engine power, or mechanical or electric power converted from other wind power, thermal energy, temperature-difference energy, or solar energy, etc;
-- The heat exchanger (100): It is the heat exchanger having internal flow channels with heat absorbing/release capability, and is configured to generate heat absorbing/release function to fluid when pumping fluid passing through;
-- Power source (300): The electrical machine which provides for operation, including AC or DC city power system or standalone electric power supplying devices;
-- The periodic fluid direction-change operative control device (250): It is constituted by electromechanical components, solid state electronic components, or microprocessors and relevant software and operative control interfaces to operatively control the bidirectional fluid pumping device (123) for periodically changing the flow direction of the fluid passing through the heat exchange device thereby operatively controlling the temperature difference distribution status between the fluid and the heat exchanger (100) in the heat exchange device;
The timings for fluid for periodic flow direction change are that 1) the pumping direction of the bidirectional fluid pumping device (123) is manually operatively controlled, 2) the pumping direction of the bidirectional fluid pumping device (123) is operatively controlled by the periodic fluid direction-change operative control device (250) through setting time period according to temperature variations, or 3) the at least one temperature detecting device (11) is installed at position capable of directly or indirectly detecting the temperature variation of fluid, wherein the detecting signals of the temperature detecting device (11) are transmitted to the periodic fluid direction-change operative control device (250), so as when the setting temperature is reached, the pumping direction of the bidirectional fluid pumping device (123) is operatively controlled to pump the fluid in reverse flow direction.

2. A single flow circuit heat exchange device for periodic positive and reverse directional pumping as claimed in claim 1, wherein it is applied for the full heat exchange device (200) having the heat exchanger being interposed or coated with permeating type or absorbing type desiccant material, or the heat exchanger of the full heat exchanger itself being made of material or structure further having moisture absorbing function is through that 1) the pumping direction of the bidirectional fluid pumping device (123) is manually operatively controlled, or 2) the pumping direction of the bidirectional fluid pumping device (123) is operatively controlled by the periodic fluid direction-change operative control device (250) through setting time period according to temperature variations, or setting time period according to humidity variations, or setting time period according to temperature and humidity variations simultaneously, or 3) the at least one temperature detecting device (11) and at least one humidity detecting device (21) are installed at position capable of directly or indirectly detecting the temperature variation and humidity variation of fluid, which includes being installed with both or at least one detecting device, wherein the detecting signals of the temperature detecting device (11) and the humidity detecting device (21) are transmitted to the periodic fluid direction-change operative control device (250), so as when the full heat exchanger (200) reaches both or either one of the setting temperature or setting humidity, the pumping direction of the bidirectional fluid pumping device (123) is operatively controlled to pump the fluid in reverse flow direction; the aforesaid fluid having two different flow directions for passing through the full heat exchanger (200) inside the heat exchange device changes the distribution status of the temperature and humidity saturation degree differences between the fluid and the full heat exchanger along with the flow direction of the fluid;
Said temperature detecting device (11) and the humidity detecting device (21) can be in an integral structure or separated installed.

3. A single flow circuit heat exchange device for periodic positive and reverse directional pumping as claimed in claim 1, wherein two reverse installed unidirectional fluid pumps (120) to pump by turns being installed at the two ends of the heat exchanger (100) constitute the function of the bidirectional fluid pumping device (123) and are subject to the operative control of the periodic fluid direction-change operative control device (250).

4. A single flow circuit heat exchange device for periodic positive and reverse directional pumping as claimed in claim 1, wherein it is applied for the full heat exchange device (200) having the heat exchanger being interposed or coated with permeating type or absorbing type desiccant material, or for the heat exchanger of the full heat exchanger itself being made of material or structure further having moisture absorbing function is through that 1) the pumping direction of the bidirectional fluid pumping device (123) is manually operatively controlled, or 2) the pumping direction of the bidirectional fluid pumping device (123) is operatively controlled by the periodic fluid direction-change operative control device (250) through setting time period according to temperature variations, or setting time period according to humidity variations, or setting time period according to temperature and humidity variations simultaneously, or 3) the at least one temperature detecting device (11) and at least one humidity detecting device (21) are installed at position capable of directly or indirectly detecting the temperature variation and humidity variation of fluid, which includes being installed with both or at least one detecting device, wherein the detecting signals of the temperature detecting device (11) and the humidity detecting device (21) are transmitted to the periodic fluid direction-change operative control device (250), so that when the full heat exchanger (200) reaches both or either one of the setting temperature and setting humidity, the pumping direction of the bidirectional fluid pumping device (123) is operatively controlled to pump the fluid in reverse flow direction; the aforesaid fluid having two different flow directions for passing through the full heat exchanger (200) inside the heat exchange device changes the distribution status of the temperature and humidity saturation degree differences between the fluid and the full heat exchanger along with the flow direction of the fluid;
Said temperature detecting device (11) and the humidity detecting device (21) can be in an integral structure or separated installed.

5. A single flow circuit heat exchange device for periodic positive and reverse directional pumping as claimed in claim 1, wherein the temperature detecting device (11), humidity detecting device (21), and gaseous or liquid fluid composition detecting device (31) are all installed or at least one or more than one detecting devices are installed on the heat exchange device (1000), heat exchanger (100) or total heat exchanger (200) at positions near both or one of the fluid port (a) and fluid port (b), or at other positions capable of detecting exchanging fluids, wherein the number of aforementioned detecting devices can be one or more than one to provide the detected signal as the reference for the operation of one or more than one functions as follows, including: 1) as the reference for operatively controlling the periodic switch timing of fluid flowing direction pumped by the bi-directional fluid pumping devices (123); or 2) as the reference for operatively controlling the bi-directional fluid pumping devices (123) to control the speed or the flow rate of the pumping fluid; or 3) as the reference for operatively controlling the open volume of the fluid valve to control the speed or the flow rate of the pumping fluid;
For the aforementioned temperature detecting device (11), humidity detecting device (21), and the gaseous or liquid fluid composition detecting device (31), all detecting devices can be in an integral structure, or partial detecting devices are in an integral structure, or each detecting device is separated installed.

6. A single flow circuit heat exchange device for periodic positive and reverse directional pumping as claimed in claim 1, wherein the bi-directional fluid pumping device (123) is constituted by the bidirectional fluid pump with positive and reverse directional pumping function being installed on single side for coupling to one end of the full heat exchange device (200) having the heat exchanger being interposed or coated with permeating type or absorbing type desiccant material, or the heat exchanger of the full heat exchanger itself being made of material or structure further having moisture absorbing function is through that 1) the pumping direction of the bidirectional fluid pumping device (123) is manually operatively controlled, or 2) the pumping direction of the bidirectional fluid pumping device (123) is operatively controlled by the periodic fluid direction-change operative control device (250) through setting time period according to temperature variations, or setting time period according to humidity variations, or setting time period according to temperature and humidity variations simultaneously, or 3) the at least one temperature detecting device (11), at least one humidity detecting device (21), and at least one gaseous or liquid fluid composition detecting device (31) are installed at position capable of directly or indirectly detecting the temperature variation, humidity variation, and gaseous or liquid fluid composition variation, which includes being installed with all three or at least one detecting device, wherein the detecting signals of the temperature detecting device (11), or the humidity detecting device (21), or the gaseous or liquid fluid composition detecting device (31) are transmitted to the periodic fluid direction-change operative control device (250), so that the pumping direction of the bidirectional fluid pumping device (123) being constituted by the bidirectional fluid pump with positive and reverse directional pumping function being installed on single side is operatively controlled to pump the fluid in reverse flow direction; the aforesaid fluid having two different flow directions for passing through the full heat exchanger (200) inside the heat exchange device changes the distribution status of the temperature and humidity saturation degree differences between the fluid and the full heat exchanger along with the flow direction of the fluid;
Said temperature detecting device (11), the humidity detecting device (21) and the gaseous or liquid fluid composition detecting device (31) can be in an integral structure or separated installed.

7. A single flow circuit heat exchange device for periodic positive and reverse directional pumping as claimed in claim 1, wherein the bi-directional fluid pumping device (123) is constituted by the unidirectional fluid pumps (120) on both sides that pump in reverse direction by turns for coupling to both ends of the full heat exchange device (200) having the heat exchanger being interposed or coated with permeating type or absorbing type desiccant material, or for the heat exchanger of the full heat exchanger itself being made of material or structure further having moisture absorbing function is through that 1) the pumping direction of the bidirectional fluid pumping device (123) is manually operatively controlled, or 2) the pumping direction of the bidirectional fluid pumping device (123) is operatively controlled by the periodic fluid direction-change operative control device (250) through setting time period according to temperature variations, or setting time period according to humidity variations, or setting time period according to temperature and humidity variations simultaneously, or 3) the at least one temperature detecting device (11), at least one humidity detecting device (21), and at least one gaseous or liquid fluid composition detecting device (31) are installed at position capable of directly or indirectly detecting the temperature variation, humidity variation, and gaseous or liquid fluid composition variation, which includes being installed with all three or at least one detecting device, wherein the detecting signals of the temperature detecting device (11), or the humidity detecting device (21), or the gaseous or liquid fluid composition detecting device (31) are transmitted to the periodic fluid direction-change operative control device (250), so that the pumping direction of the bidirectional fluid pumping device (123) being constituted by the unidirectional fluid pumps (120) on both sides that pump in reverse direction by turns is operatively controlled to pump the fluid in reverse flow direction; the aforesaid fluid having two different flow directions for passing through the full heat exchanger (200) inside the heat exchange device changes the distribution status of the temperature and humidity saturation degree differences between the fluid and the full heat exchanger along with the flow direction of the fluid;
Said temperature detecting device (11), humidity detecting device (21), and gaseous or liquid fluid composition detecting device (31) can be in an integral structure or separated installed.

8. A single flow circuit heat exchange device for periodic positive and reverse directional pumping as claimed in claim 1, wherein the bidirectional fluid pumping device (123) comprises one ore more than one structures as follows, including:
**1)** It is by adopting at least one fluid pump capable of bidirectionally pumping the fluid installed at position on either the fluid port (a) or the fluid port (b) of the heat exchanger (100) to operatively control the bidirectional fluid pump to periodic pump in positive or reverse directions by the periodic fluid direction-change operative control device (250) thereby periodically changing the fluid direction;
**2)** It is by adopting at least one fluid pump capable of bidirectionally pumping the fluid installed in the middle of the heat exchanger (100) to operatively control the bidirectional fluid pump to periodic pump in positive or reverse directions by the periodic fluid direction-change operative control device (250) thereby periodically changing the fluid direction;
**3)** It is by adopting at least two fluid pumps capable of bidirectionally pumping the fluid respectively installed on the fluid port (a) and the fluid port (b) at the two ends of the heat exchanger (100) and by means of the periodic fluid direction-change operative control device (250) to operatively control the bidirectional fluid pump to allow the single flow circuit heat exchange device for periodic positive and reverse directional pumping of the present invention having one or more than one operational functions as follows, including: **i)** the operation of simultaneously pumping in the same direction as well as simultaneously changing the pumping direction periodically, or **ii)** one of the fluid pumps capable of bidirectionally pumping the fluid respectively installed on the fluid port (a) and the fluid port (b) are alternately to pump in different directions;
**4)** It is by adopting at least two unidirectional fluid pumps (120) in different pumping directions in series connection to constitute the bidirectional fluid pumping device being installed as position on either one of the fluid port (a) or the fluid port (b) of the heat exchanger (100) thereby by the operative control of the periodic fluid direction-change operative control device (250) to alternately use one of the unidirectional fluid pump (120) in one direction to pump periodically, thereby periodically changing the fluid direction, wherein if the unidirectional fluid pump (120) constituting the bidirectional fluid pumping device (123) is irreversible, the individual unidirectional fluid pump can respectively parallel connect with a reversible unidirectional valve (126);
**5)** It is by adopting at least two unidirectional fluid pumps (120) in different pumping directions in series connection to constitute the bidirectional fluid pumping device being installed at the middle section of the heat exchanger (100) thereby by the operative control of the periodic fluid direction-change operative control device (250) to alternately use one of the unidirectional fluid pump in one direction to pump periodically, thereby periodically changing the fluid direction, wherein if the unidirectional fluid pump (120) constituting the bidirectional fluid pump device (123) is irreversible, the individual unidirectional fluid pump can respectively parallel connect with a reversible unidirectional valve (126);
**6)** It is by adopting at least two unidirectional fluid pumps (120) in different pumping directions in series connection to constitute the bidirectional fluid pumping device being installed on the fluid port (a) and the fluid port (b) at the two ends of the heat exchanger (100) and by means of the periodic fluid direction-change operative control device (250) to operatively control the unidirectional fluid pumps (120) in different pumping directions and to allow the single flow circuit heat exchange device for periodic positive and reverse directional pumping of the present invention having one or more than one operational functions as follows, including: **i)** the operation of simultaneously pumping in the same direction as well as simultaneously changing the pumping direction periodically, or **ii)** the unidirectional fluid pumps (120) in different pumping directions being respectively installed on the fluid port (a) and the fluid port (b) are subject to the operative control of the periodic fluid direction-change operative control device (250) to alternately pump by one of the unidirectional fluid pump in one direction periodically, thereby periodically changing the fluid direction, wherein if the unidirectional fluid pump constituting the bidirectional fluid pump device (123) is irreversible, the individual unidirectional fluid pump can respectively parallel connect with a reversible unidirectional valve (126);
**7)** It is by adopting at least two unidirectional fluid pumps (120) in different pumping directions in parallel connection to constitute the bidirectional fluid pumping device being installed at position on either one of the fluid port (a) and the fluid port (b) of the heat exchanger (100) thereby by the operative control of the periodic fluid direction-change operative control device (250) to periodically operatively control one of the unidirectional fluid pumps (120) to pump alternately, thereby periodically changing the fluid direction, wherein if the structure of the adopted unidirectional fluid pump (120) does not have the anti-reverse flow function, the individual fluid pump can firstly respectively series connect with a unidirectional valve (126) in forward polarity before being parallel connected to avoid reverse flows;
**8)** It is by adopting at least two unidirectional fluid pumps (120) in different pumping directions in parallel connection to constitute the bidirectional fluid pumping device being installed at the middle section of the heat exchanger (100) thereby by the operative control of the periodic fluid direction-change operative control device (250) to periodically operatively control one of the unidirectional fluid pumps (120) to pump alternately, thereby periodically changing the fluid direction, wherein if the structure of the unidirectional fluid pump (120) used by the bidirectional fluid pumping device (123) does not have the anti-reverse flow function, the individual fluid pump can firstly respectively series connect with a unidirectional valve (126) in forward polarity before being parallel connected to avoid reverse flows;
**9)** It is by adopting at least two unidirectional fluid pumps (120) in different pumping directions in parallel connection to constitute the bidirectional fluid pumping device being installed on the fluid port (a) and the fluid port (b) at the two ends of the heat exchanger (100) and by means of the periodic fluid direction-change operative control device (250) to operatively control the unidirectional fluid pumps in different pumping directions and to allow the single flow circuit heat exchange device for periodic positive and reverse directional pumping of the present invention having one or more than one operational functions as follows, including: **i)** the operation of simultaneously pumping in the same direction as well as simultaneously changing the pumping direction periodically, or **ii)** the unidirectional fluid pumps (120) in different pumping directions being respectively installed on the fluid port (a) and the fluid port (b) are by the operative control of the periodic fluid direction-change operative control device (250) to periodically pump by one of the unidirectional fluid pump in one direction alternately, thereby periodically changing the fluid direction, wherein if the unidirectional fluid pump (120) is irreversible, the individual unidirectional fluid pump can respectively parallel connect with a reversible unidirectional valve (126);
**10)** It is constituted by at least one unidirectional fluid pump (120) and four controllable switch type fluid valves (129, 129') in bridge type combination, and is installed at position on either one of the fluid port (a) or the fluid port (b) of the heat exchanger (100) thereby to alternately operative control two fluid valves (129) to open and the other two fluid valves (129') to close or two fluid valves (120) to close and the other two fluid valves (129') to close by the periodic fluid direction-change operative control device (250) during the operation of the unidirectional fluid pump (120), thereby periodically changing the fluid directions;
**11)** It is constituted by at least one unidirectional fluid pump (120) and four controllable switch type fluid valves (129, 129') in bridge type combination, and is installed at middle section of the heat exchanger (100) thereby to alternately operative control two fluid valves (129) to open and the other two fluid valves (129') to close or two fluid valves (120) to close and the other two fluid valves (129') to close by the periodic fluid direction-change operative control device (250) during the operation of the unidirectional fluid pump (120), thereby periodically changing the fluid directions;
**12)** It is constituted by at least two unidirectional fluid pumps (120) and four controllable switch type fluid valves (129, 129') in bridge type combination, and is installed on the fluid port (a) and the fluid port (b) at two ends of the heat exchanger (100) thereby to alternately operative control two fluid valves (129) to open and the other two fluid valves (129') to close or two fluid valves (120) to close and the other two fluid valves (129') to close by the periodic fluid direction-change operative control device (250) during the operation of the unidirectional fluid pump (120), thereby periodically changing the fluid directions.

9. A single flow circuit heat exchange device for periodic positive and reverse directional pumping as claimed in claim 1, wherein the periodic fluid direction-change operative control device (250) is equipped with electric motor, or controllable engine power, or mechanical or electric power generated or converted from other wind energy, thermal energy, temperature-difference energy, or solar energy for controlling various fluid pumps for driven, or controlling the operation timing of the fluid pumps or fluid valves, thereby changing the direction of the two circuits passing through the heat exchanger (100) and further to operatively control partial or all functions of modulation including the rotational speed, flow rate, fluid pressure of various fluid pumps thereof.

10. A single flow circuit heat exchange device for periodic positive and reverse directional pumping as claimed in claim 1, wherein in the operation of periodically positive and reverse directional pumping fluid, it is further through the periodic fluid direction-change operative control device (250) to manipulate the flow rate of fluid pumped by the bi-directional pumping device (123), wherein the operational modes include one or more than one types as follows, including:
**1)** the flow rate of pumping fluid is adjusted or set manually;
**2)** the flow rate of fluid is operatively controlled by referring to the detected signal of the at least one temperature detecting device;
**3)** the flow rate of fluid is operatively controlled by referring to the detected signal of the at least one moisture detecting device;
**4)** the flow rate of fluid is operatively controlled by referring to the detected signal of the at least one gaseous or liquid fluid composition detecting device;
**5)** the flow rate of the fluid is jointly operatively controlled by two or more than two said 1)∼4) items.

11. A single flow circuit heat exchange device for periodic positive and reverse directional pumping as claimed in claim 1, wherein when installed with the function of operatively controlling the flow rate, the flow rate range of the controlled fluid is between stop delivery to the maximum delivering volume, and the flow rate of fluid is manipulated in stepped or stepless according to the operational requirements, wherein it is further by following one or more than one devices to change the flow rate of fluid, including:
**1)** to operatively control the rotational speed in pumping operation of bi-directional pumping device (123) from idling to the maximum speed range, thereby to further operatively control the flow rate of fluid;
**2)** by adopting the bi-directional pumping device (123) with controllable fluid valve inlet/outlet to operatively control the open volume of the fluid valve inlet/outlet of the bi-directional pumping device (123), thereby to further operatively control the flow rate of fluid;
**3)** by adopting the unidirectional valve (126) with controllable fluid valve inlet/outlet to operatively control the open volume of the fluid valve inlet/outlet of the unidirectional valve (126), thereby to further operatively control the flow rate of fluid;
**4)** by adopting the fluid valve (129) and fluid valve (129') with controllable fluid valve inlet/outlet to operatively control the open volume of the fluid valve inlet/outlet of the fluid valve (129) and fluid valve (129'), thereby to further operatively control the flow rate of fluid;
**5)** by operatively controlling at least one of devices in item 1)∼4) to intermittingly pumping fluid, thereby to modulate the average flow rate by the time ratio of pumping and stop pumping.

12. A single flow circuit heat exchange device for periodic positive and reverse directional pumping as claimed in claim 1, wherein the flow rate ratio of the two flow circuits passing through the heat exchanger (100) or the total heat exchanger (200) during the operation can be one or more than one ratio modes as follows, including:
**1)** In the operation of periodically positive and reverse directional pumping fluid, the flow rate of fluid in one direction is greater than that of fluid in the other direction;
**2)** In the operation of periodically positive and reverse directional pumping fluid, the flow rates of the fluid in two directions are the same.

13. A single flow circuit heat exchange device for periodic positive and reverse directional pumping as claimed in claim 1, wherein in the operation of periodically positive and reverse directional pumping fluid, the pumping periodic mode includes one or more than one type as follows, including:
**1)** In the operation of periodically positive and reverse directional pumping fluid, the operational time of positive direction and reverse direction are the same;
**2)** In the operation of periodically positive and reverse directional pumping fluid, the operational time of positive direction and reverse direction are different;
**3)** The mixed mode of both item 1) and 2).

14. A single flow circuit heat exchange device for periodic positive and reverse directional pumping as claimed in claim 1, wherein except for the function of periodically positive and reverse directional pumping operation, it further simultaneously has one ore more than one special operational modes, including:
**1)** The fluid of two flow circuits pumps in fluid in the same flowing direction;
**2)** The fluid of two flow circuits pumps out fluid in the reverse flowing direction;
The function of the same directional pumping of aforementioned two flow circuits can be applied for the requirement to emergently increase the flow rate of fluid pumping in or pumping out.

15. A single flow circuit heat exchange device for periodic positive and reverse directional pumping as claimed in claim 1, wherein the heat exchanger or full heat exchanger is embodied to have the following characteristics: 1) it is of the tubular structure in linear or other geometric shapes; 2) it is constituted by the multi-layer structure having fluid path for passing gaseous or liquid state fluids; or 3) it is constituted by a plurality of single flow path heat exchange device with one or more than one fluid path in series connection, parallel connection or series and parallel connection.

16. A single flow circuit heat exchange device for periodic positive and reverse directional pumping as claimed in claim 1, wherein in the operation of flow direction change, to mitigate the impact generated by the gaseous or liquid state fluid in the course of pump when the fluid being intercepted at sudden, including the liquid hammer effect generated when the pumping liquid state fluid being interrupted, one or more than one operational methods as follows can be further added to the operational modes of the flow direction change control:
**1)** In the operation of fluid flow direction change, it is through the operatively control of the fluid pump or fluid valve to slowly reduce the flow rate of fluid, then to be switched to slowly increase the flow rate of fluid to a maximum preset value in the other flow direction;
**2)** In the operation of fluid flow direction change, it is through the operatively control of the fluid pump or fluid valve to slowly reduce the flow rate of fluid, and to be switched to stop pumping for a preset time period, then further to be switched to slowly increase the flow rate of fluid to a maximum preset value in the other flow direction.
